Europäisches Patentamt

European Patent Office

Office européen des brevets

(11) Publication number: **0 272 239**
**A2**

## (12) EUROPEAN PATENT APPLICATION

(21) Application number: 87870180.4

(22) Date of filing: **16.12.87**

(51) Int. Cl.4: **C08L 27/06** , //(C08L27/06, 35:06,21:00)

(30) Priority: **18.12.86 US 944156**

(43) Date of publication of application:
**22.06.88 Bulletin 88/25**

(84) Designated Contracting States:
**AT BE CH DE ES FR GB GR IT LI LU NL SE**

(71) Applicant: **Monsanto Company**
**Patent Department 800 North Lindbergh**
**Boulevard**
**St. Louis Missouri 63167(US)**

(72) Inventor: **Dufour, Daniel Louis**
**109 avenue des Statuaires**
**B-1180 Brussels(BE)**

(74) Representative: **McLean, Peter et al**
**Monsanto Europe S.A. Patent Department**
**Avenue de Tervuren 270-272 Letter Box No 1**
**B-1150 Brussels(BE)**

(54) **Polyblends.**

(57) Polyblends of PVC and a terpolymer of styrene, maleic anhydride or imide, and alkyl acrylate or methacrylate of defined composition have an improved transparency and acceptable impact and high-temperature resistance when blow-moulded into hollow containers for filing with hot substances.

EP 0 272 239 A2

## POLYBLENDS

In this specification, all parts and percentages are by weight unless otherwise stated.

This invention relates to polyblends, and particularly to polyblends of vinyl chloride polymers with copolymers of vinylaromatic monomers and unsaturated dicarboxylic anhydrides. The polyblends of the invention are particularly useful for making hollow articles by blow-moulding.

Vinyl cloride polymers, for example polyvinyl chloride (PVC), are increasingly used for blow-moulding hollow articles such as bottles or other containers, but there is a requirement for increased heat-resistance so that such containers can be filled with hot substances. For example, some food products are best sealed into their containers when hot so as to reduce the risk of bacterial contamination; some other products that are solid or very viscous at room temperature are more easily put into their containers when molten. It has been proposed to increase the heat-resistance of PVC by blending it with a copolymer of styrene and maleic anhydride, but we have found that in most cases this causes a loss of transparency and sometimes also of impact strength. This is a considerable disadvantage in many applications.

My U.S. Patent 4,311,806 describes a polyblend composition comprising :

A. from 20 to 80% by weight of polyvinylchloride

B. from 80 to 20% by weight of rubber-modified copolymer of a vinylaromatic monomer, and unsaturated dicarboxyl acid anhydride and copolymerizable termonomer, wherein the relative weight proportions of the monomers are 50 to 85% of the vinylaromatic monomer, 15 to 30% of the anhydride and 0 to 20% of the termonomer; and wherein the monomers are polymerized in the presence of 5 to 25% by weight of a rubber having a glass transition temperature below 0°C; and

C. from 0 to 40% by weight of a composition comprising a graft copolymer of from 20 to 40% by weight of a monomer selected from the group comprising methyl methacrylate and acrylonitrile and 80 to 60% by weight of a vinyl aromatic monomer said copolymer being grafted onto from 10 to 60%, based on the weight of the composition, of a substrate rubber having a glass transition temperature below 0°C.

There has now been found a polyblend of a certain composition that has excellent heat resistance whilst retaining good transparency and impact strength.

The polyblend of the invention is one comprising from 40 to 85 % of a polymer A, from 15 to 45 % of a polymer B and from 0 to 15 % of a polymer C, based on the total weight of polymers A, B and C in the polyblend, and wherein : -

Polymer A is a homopolymer or copolymer of at least 90 % (based on polymer A) of vinyl chloride monomer;

Polymer B is a copolymer of (based on polymer B) from 40 to 60% of a vinylaromatic hydrocarbon monomer, from 12 to 30% of a cyclic anhydride or cyclic imide of an ethylenically unsaturated dicarboxylic acid (or a mixture of such anhydride and imide), and from 20 to 40% of a $C_1$-$C_4$-alkyl acrylate or methacrylate ester; and

Polymer C is a rubber capable of improving the impact resistance without reducing transparency of the polyblend.

The invention also comprises a process of producing a transparent hot-fillable hollow container by blow-moulding, in which there is employed a polyblend according to the invention.

Also included within the invention is a transparent hot-fillable container comprising a polyblend according to the invention.

Preferably the polyblend contains from 70 to 75 % of Polymer A, from 15 to 25 % of polymer B and from 8 to 13 % of Polymer C.

Polymer A is a homopolymer or copolymer of at least 90 % (based on polymer A) of vinyl chloride monomer. Where polymer A is a copolymer, it preferably contains 95 % of vinyl halide monomer. It is preferred that Polymer A has a K value between 50 and 90. The K value is calculated from the measurement of the inherent viscosity at 25° C in 1.0% solution of vinyl chloride polymer in cyclohexanone according to the procedure described in DIN 53726.

Polymer B is a copolymer of from 40 to 60% of a vinyl-aromatic hydrocarbon monomer, from 12 to 30 % of a cyclic anhydride (or cyclic imide) of an ethylenically unsaturated dicarboxylic acid (or a mixture thereof), and from 20 to 40 % of a $C_1$-$C_4$-alkyl acrylate or methacrylate. Preferably polymer B contains from 45 to 55 % of the vinylaromatic hydrocarbon monomer, from 18 to 26% of the cyclic anhydride and from 20 to 30% of the alkyl acrylate or methacrylate. The vinylaromatic hydrocarbon monomer is preferably styrene, although hydrocarbon derivations of styrene such as alpha-methylstyrene or vinyltoluene are also useful. Preferably maleic anhydride is employed as dicarboxylic anhydride monomer; part of the anhydride can be replaced by an imide monomer. Suitable imide monomers include maleimide and N-substituted maleimides such as for example N-phenyl maleimide. Mixture of these can be employed. The ester monomer is preferably methyl methacrylate; others that can be employed include for example methyl acrylate, ethyl acrylate, ethyl methacrylate and butyl acrylate. Mixture of such ester monomers can be employed if desired.

Polymer C is a rubber capable of improving the impact resistance without reducing transparency of the blend. Suitable rubbers include polybutadiene, polyisoprene, butadiene-styrene copolymer rubbers and natural rubber. The rubber can be grafted with one or more monomers, for example vinylaromatic monomers such as those described above in connection with polymer B, unsaturated nitriles such as acrylonitrile or methacrylonitrile, or a $C_1$-$C_4$-alkyl acrylate or methacrylate. Where Polymer C includes a grafting monomer falling within any of the classes of monomers from which polymer B is formed, such grafting monomer is not to be considered as constituting part of the proportion of such monomer in polymer B. In other words polymer B and C are considered as distinct components of the polyblend, even though it is possible that some chemical reaction between them may occur during the conditions of heat and mechanical shear under which, as will be described, the polyblend is produced from its components. Preferably Polymer C is a copolymer of styrene and methyl methacrylate grafted on polybutadiene.

Production of polymers A, B and C can be by conventional techniques, indeed several members of the class polymers A, such as PVC, and polymer C, are articles of commerce. Polymer B is of special composition but can be produced by a method similar to those used commercially to produce polystyrene or styrene copolymers such as styrene/acrylonitrile.

The components of the polyblend can be blended together by any conventional technique, which would for example normally involve mechanical shear at an elevated temperature, for example in an extruder, a Banbury mixer or a calendering unit.

The polyblends can contain one or more additives, such as antioxidants, fillers, colourants, stabilisers, plasticisers, light stabilisers and so on, such as are conventionally used in vinyl chloride polymers.

In the process of the invention for making a hollow container (for example a bottle) by blow-moulding, the techniques employed can be conventional, with perhaps some slight adjustment of the operating conditions, within the ordinary skill of a trained operator, in order to obtain the best performance. A parison is first formed and expanded by gas pressure into contact with a female mould. Extrusion-blow-moulding or injection-blow-moulding are for example very suitable, with plug assistance where the shape of an article makes this desirable. The container produced is hot-fillable, by which is meant that it can be filled with contents, for example a liquid, having a temperature of 85°C. The combination of hot-fill capability with acceptable transparency and impact strength is an important advantage in the containers made by the process of the invention.

The invention is illustrated by the following Examples.

## EXAMPLES 1 TO 18

In the following Examples 1 to 18, a number of polyblends were prepared and calendered into films, and the Vicat softening point, Izod impact strength and transparency of each film were measured; from these data it was possible to determine which of the polyblends would be usable for producing hot-fillable containers in accordance with the invention. Examples 2 and 11 were according to the invention, Examples 1, 3 to 10 and 12 to 18 were comparative Examples.

Polymer A was in each Example a commercial unplasticised PVC having a K value of 58, calculated from the measurement of the inherent viscosity at 25°C in 1.0 % solution of vinyl chloride polymer in cyclohexanone according to the procedure described in DIN 53726.

A series of different polymers B were used, each consisting of a copolymer of styrene, maleic anhydride and methyl methacrylate in the percentage proportions shown in Table 1.

## T A B L E    I

| Polymer | Styrene | Maleic Anhydride | Methyl Methacrylate |
|---------|---------|------------------|---------------------|
| $B_1$ | 75.0 | 25.0 | 0 |
| *$B_2$ | 55.0 | 22.0 | 23.0 |
| $B_3$ | 88.2 | 5.8 | 6.0 |
| $B_4$ | 80.3 | 12.7 | 7.0 |
| $B_5$ | 76.0 | 17.0 | 7.0 |
| $B_6$ | 70.0 | 23.0 | 7.0 |
| $B_7$ | 67.5 | 25.5 | 7.0 |
| $B_8$ | 65.2 | 29.8 | 5.0 |

**\*Polymer used in Examples of the invention**

Each of the polymers B was prepared by continuous mass polymerisation of the constituent monomers.

Polymer C was in each Example a methyl methacrylate/butadiene/styrene copolymer rubber impact modifier sold by Röhm and Haas under the trade name "MBS BTA III FPI".

Each polyblend, Examples 1 to 9, was made by blending polymers A, B and C in the proportions shown in Table 2. The blending was performed on a laboratory two-roll mill. A 100 gram sample was processed for 7 minutes with the back roll at a temperature of 170° C and rotating at 15 revolutions per minute and the front roll at 180° C and rotating at 18 revolutions per minute. The sample was calendered into a film 1 mm thick. To make samples for Izod and Vicar measurements several layers of film were compressed at 180°C into a plaque 3.2 mm thick. To make samples for transparency measurement, one thickness of film was compressed at 180°C to a thickness of 0.5 mm.

Each polyblend also included the following additions :

0.5 phr (parts per hundred parts of resin) Paraloid K 120N acrylic processing aid, supplied by Röhm & Haas.

1.0 phr Paraloid K 175 acrylic processing aid, supplied by Röhm & Haas.

2.0 phr Lankromark LT63 tin-containing stabiliser for PVC, supplied by Lankro.

1.0 phr Lankroplast L333 "One-pack" lubricant supplied by Lankro.

The Vicat softening point, Izod impact strength and transparency are also reported in Table 2. Transparency was measured as the average % transmission of light through the sample, using a UV/visible-light spectrophotometer at ten specific wavelengths corresponding to the maximum intensity in the visible-light range of the solar radiation spectrum. The ten wavelengths were : 489.4 nm, 515.1 nm, 529.8 nm, 541.4 nm, 551.8 nm, 561.9 nm, 572.5 nm, 584.8 nm, 600.8 nm and 627.2 nm.

## T A B L E   2

| Example No. | Compn. A/B/C | B polymer No. | Vicat S.pt. (1kg) °C | Izod (1.27 x 0.32cm) J/M | Transparency (transmission%) |
|---|---|---|---|---|---|
| 1. | 74/17/9 | $B_1$ | 96 | 32 | 8 |
| *2. | 74/17/9 | $B_2$ | 89 | 45 | 58 |
| 3 | 74/17/9 | $B_3$ | 88 | 44 | 4 |
| 4 | 74/17/9 | $B_4$ | 91 | 49 | 16 |
| 5 | 74/17/9 | $B_5$ | 96 | 48 | 14 |
| 6 | 74/17/9 | $B_6$ | 96 | 39 | 14 |
| 7 | 74/17/9 | $B_7$ | 93 | 36 | 12 |
| 8 | 74/17/9 | $B_8$ | 88 | 25 | 11 |
| 9(control) | 91/00/9 | - | 81 | 39 | 88 |

*Example 2 is in accordance with the invention. Examples 1 and 3 to 9 are for comparative purposes. It can be seen that the polyblend of Example 2 gave a film having a Vicat softening point above 85°C and would therefore be suitable for making hot-fillable containers. It had an excellent impact strength and was distinguished from all the other polyblends containing "B" polymer by an excellent transparency, transmitting 58% of incident light. Control Example 9, which contained no B polymer, had a high transparency, but was not suitable for making hot-fillable containers because it had a Vicat softening point of only 81°C.

Another series of polyblends, Examples 10 to 18, were prepared and tested in a similar manner, and the results are shown in Table 3: These differed from Examples 1 to 9 in having a higher proportion of Polymer C. Polymer C was "MBS BTA III Or" a methyl methacrylate/butadiene/styrene rubber modifier supplied by Röhm and Haas. The minor additives were the same as in Examples 1 to 9.

## T A B L E   3

| Example No. | Compn. A/B/C | B-polymer No. | Vicat S.pt. (1kg) °C | Izod (1.27x0.32cm) | Transparency (transmission %) |
|---|---|---|---|---|---|
| 10 | 71/17/12 | $B_1$ | 95 | 613 | 13 |
| *11 | 71/17/12 | $B_2$ | 87 | 501 | 63 |
| 12 | 71/17/12 | $B_3$ | 90 | 341 | 4 |
| 13 | 71/17/12 | $B_4$ | 92 | 119 | 21 |
| 14 | 71/17/12 | $B_5$ | 95 | 413 | 21 |
| 15 | 71/17/12 | $B_6$ | 96 | 458 | 23 |
| 16 | 71/17/12 | $B_7$ | 93 | 437 | 20 |
| 17 | 71/17/12 | $B_8$ | 93 | 91 | 17 |
| 18 | 88/00/12 | - | 76 | 835 | 86 |

**\*Example of the invention.**

As in the previous series of Examples 1 to 9, the superior combination of properties of Example 11, compared with the other Examples, is readily apparent.

**Claims**

1. A polyblend having a high transparency when formed into a hollow container, comprising from 40 to 85 % of a polymer A, from 15 to 45 % of a polymer B and from 0 to 15% of a polymer C, based on the total weight of polymers A, B and C in the polyblend, and wherein :

Polymer A is a homopolymer or copolymer of at least 90 % based on the weight of polymer A) of a vinyl halide monomer;

Polymer B is a copolymer of (based on the weight of polymer B) from 40 to 60 % of a vinylaromatic hydrocarbon monomer, from 12 to 30% of a cyclic anhydride or cyclic imide of an ethylenically unsaturated dicarboxylic acid (or a mixture of such anhydride and imide), and from 20 to 40% of a $C_1$-$C_4$-alkyl acrylate or methacrylate ester; and

Polymer C is a rubber capable of improving the impact resistance without reducing transparency of the polyblend, all percentages being by weight.

2. A polyblend of Claim 1, wherein polymer A is a homopolymer of vinyl chloride.

3. A polyblend of either Claim 1 or Claim 2, wherein polymer B is a copolymer of styrene, maleic anhydride and methyl methacrylate.

4. A polyblend of any of the preceding claims, wherein polymer B is a copolymer of (based on the weight of polymer B) from 45 to 55 % of vinylaromatic hydrocarbon monomer, from 18 to 26 % of cyclic anhydride or cyclic imide of an ethylenically unsaturated dicarboxylic acid (or mixture of such anhydride or imide), and from 20 to 30 % of a $C_1$-$C_4$-alkyl acrylate or methacrylate ester.

5. A polyblend of any of the preceding claims, wherein polymer C is a copolymer of styrene and methyl methacrylate grafted polybutadiene.

6. A process of producing a transparent hot-fillable hollow container by blow-moulding, in which there is employed a poly-blend according to any of the preceding claims.

7. A transparent hot-fillable container comprising a polyblend according to any of Claims 1 to 5.